# EUROPÄISCHE PATENTSCHRIFT

(11) **EP 4 264 217 B1**
(45) Veröffentlichungstag und Bekanntmachung des Hinweises auf die Patenterteilung: **11.06.2025**
(21) Anmeldenummer: 21839466.6
(22) Anmeldetag: 15.12.2021
(51) Int. Cl.: G01M 3/14, G01M 3/38, G01N 21/95

(54) **VORRICHTUNG ZUM ÜBERPRÜFEN EINER VERSIEGELUNG EINER VERPACKUNG UND EIN VERFAHREN ZUM ÜBERPRÜFEN EINER VERSIEGELUNG**
DEVICE FOR CHECKING A SEAL OF A PACKAGE, AND METHOD FOR CHECKING A SEAL
DISPOSITIF POUR CONTRÔLER UN SCELLAGE D'UN EMBALLAGE ET PROCÉDÉ DE CONTRÔLE D'UN SCELLAGE

(30) Priorität: 15.12.2020 DE 102020133607
(43) Veröffentlichungstag der Anmeldung: 25.10.2023
(73) Patentinhaber: Syntegon Technology GmbH, 71332 Waiblingen (DE)
(72) Erfinder: LEIDIG, Juergen, 74586 Frankenhardt (DE); WEBER, Florian, 74564 Crailsheim (DE); HÄRTWEG, Marco, 74542 Braunsbach (DE)
(74) Vertreter: Novagraaf Group
(86) Internationale Anmeldenummer: PCT/EP2021/085856
(87) Internationale Veröffentlichungsnummer: WO 2022/129150

(56) Entgegenhaltungen:
- EP-A1- 1 333 267
- GB-A- 2 059 381

## Beschreibung

Die Erfindung betrifft eine Vorrichtung zum Überprüfen einer Versiegelung, insbesondere mindestens einer Siegelnaht, einer Verpackung mit den Merkmalen des Oberbegriffs des Anspruchs 1 und ein Verfahren Überprüfen einer Versiegelung mit Merkmalen des Anspruchs 10.

Üblicherweise werden vorsterilisierte pharmazeutische Artikel zum Transport und/oder Lagerung in Verpackungsbeutel gepackt. Teile der Verpackungsbeutel können aus einem luftdurchlässigen Vliesstoff aus Polyethylen bestehen. Es ist wichtig, dass diese Verpackungen und insbesondere die Siegelnähte der Verpackungen (luft-)dicht und unbeschädigt sind und es auch bleiben, um den Sterilisierungsgrad aufrechterhalten zu können.

In der Regel werden die Verpackungen nach der Versiegelung und Überprüfung der Verpackung gefaltet und zu mehreren in Kartons gestapelt. Die Verpackung der vorsterilisierten Artikel ist aus Platzgründen gefaltet im Karton gestapelt. Die Kartons werden wiederum auf einer Palette gestapelt. Diese wird dann zum Pharmazeuten versendet. Der Pharmazeut entpackt dann die Paletten und Kartons.

Der Pharmazeut hat nun keine Möglichkeit die Siegelnaht automatisch vor dem Öffnen der Verpackung der vorsterilisierten Artikel noch mal zu überprüfen. Die Siegelnaht könnte durch die Faltung der Verpackung und den Transport gegebenenfalls beschädigt worden sein. Der Pharmazeut muss daher die Versiegelung jeder einzelnen Verpackung manuell überprüfen. Dies ist (zeit-)aufwendig und fehlerbehaftet, da der Pharmazeut auch etwas übersehen kann, insbesondere, wenn er eine Vielzahl von Verpackungen auf die Versiegelung prüfen muss.

EP 1 333 267 A1 offenbart eine Vorrichtung mit Merkmalen des Oberbegriffs des Anspruchs 1.

Die Aufgabe der vorliegenden Erfindung besteht darin, eine Vorrichtung und ein Verfahren zum Überprüfen einer Versiegelung einer Verpackung bereitzustellen, wobei die obigen Nachteile ausgeräumt werden.

Diese Aufgabe wird durch eine Vorrichtung zum Überprüfen einer Versiegelung, insbesondere mindestens einer Siegelnaht, einer Verpackung, mit den Merkmalen des Anspruchs 1 gelöst, wobei die Vorrichtung umfasst:
Eine Unterdruckkammer, die ausgebildet ist, um mindestens eine Verpackung aufzunehmen und einen Unterdruck in der Unterdruckkammer zu erzeugen. Dadurch wird eine sich in der Unterdruckkammer befindliche Verpackung aufgrund von in der Verpackung befindlichem und infolge des in der Unterdruckkammer erzeugten Unterdrucks expandierendem Gas ausrichtet. Mit anderen Worten, das Gas (Luft, oder Schutzgas) in der Verpackung dehnt sich aufgrund des erzeugten Unterdrucks in der Unterdruckkammer aus und drückt von innen gegen die gefaltete Verpackung. Die gefaltete Verpackung wird so entfaltet und ausgerichtet.

Die Unterdruckkammer kann als eine Vakuumkammer ausgebildet sein.

Die Vorrichtung umfasst weiter eine Bildaufnahmeeinrichtung, die ausgebildet ist, um die ausgerichtete Verpackung und/oder die Siegelnaht der ausgerichteten Verpackung in Form von optischen, insbesondere digitalen, Daten zu erfassen.

Die Bildaufnahmeeinrichtung kann beispielsweise als eine (Digital-) Kamera ausgebildet sein. Die erfassten Daten können beispielsweise ein (digitales) Bild bzw. Foto von der gesamten Verpackung oder von Teilen bzw. Bereichen der Verpackung sein. Ebenso können die erfassten Daten beispielsweise ein (digitales) Bild bzw. Foto einer Siegelnaht oder mehreren Siegelnähten der Verpackung oder auch einzelne Bereiche der einzelnen Siegelnähte sein.

Es ist ebenso denkbar, dass die erfassten Daten beispielsweise in Form von mehreren (digitalen) Bildern/Fotos oder in Form eines Videos oder mehrerer Videos erfasst werden.

Die erfassten Daten können beispielsweise durch eine Bedienperson Überprüft werden, um festzustellen, ob die Versiegelung noch intakt ist.

Es ist denkbar, dass die Bildaufnahmeeinrichtung die optischen Daten in einem Frequenzbereich des sichtbaren Lichts erfassen kann. Es ist aber ebenso denkbar, dass die Bildaufnahmeeinrichtung die optischen Daten in einem für das menschliche Auge nicht sichtbarem Bereich, z. B. infrarot oder ultraviolett, erfasst. Die Bildaufnahmeeinrichtung kann in Form einer Infrarotkamera ausgebildet sein.

Bei den vorsterilisierten pharmazeutischen Artikeln kann es sich um Pharma-Packmittel, wie z. B. Einwegspritzen, Vials, Karpullen handeln.

Die Vorrichtung kann eine Auswerteeinrichtung aufweisen, die ausgebildet ist, um die mittels der Bildaufnahmeeinrichtung erfassten optischen Daten auszuwerten, um aufgrund der ausgewerteten Daten feststellen zu können, ob die Versiegelung und/oder die Siegelnaht der Verpackung aufgebrochen wurden.

Dies kann insbesondere durch Vergleichen mit vorbestimmten Werten realisiert werden. Wird eine Abweichung der ausgewerteten Daten von den vorbestimmten Werten festgestellt, kann daraus auf eine beschädigte Verpackung und/oder Siegelnaht geschlossen werden. Die Auswerteeinrichtung kann in Form eines Computers ausgebildet sein.

Die Bildaufnahmeeinrichtung kann innerhalb der Unterdruckkammer angeordnet sein. Die Bildaufnahmeeinrichtung kann innerhalb der Unterdruckkammer derart angeordnet sein, dass zwischen der Bildaufnahmeeinrichtung und der zu überprüfenden Verpackung innerhalb der Unterdruckkammer keine Wand der Unterdruckkammer angeordnet ist. So kann die Unterdruckkammer aus massivem, für die Bildaufnahmeeinrichtung optisch undurchdringbarem Material ausgebildet sein. Dadurch ist es möglich großen Unterdruck aufzubauen, wobei die Stabilität der Unterdruckkammer durch beispielsweise massive Konstruktion aus Metall (z. B. Stahl) gewährleistet werden kann.

Es ist aber ebenso denkbar, dass die Bildaufnahmeeinrichtung außerhalb der Unterdruckkammer angeordnet ist. In diesem Fall muss gewährleistet sein, dass im Erfassungshorizont der Bildaufnahmeeinrichtung keine für die Bildaufnahmeeinrichtung optisch undurchdringbaren Hindernisse vorhanden sind. Diese könnten die optische Erfassung der Daten mittels der Bildaufnahmeeinrichtung verhindern oder behindern.

Mindestens eine Wand der Unterdruckkammer kann zumindest teilweise aus einem für die Bildaufnahmeeinrichtung transparentem Material ausgebildet sein. Ein solches Material kann beispielsweise Glas oder Acryl sein. Ob ein Material transparent für die Bildaufnahmeeinrichtung ist oder nicht, hängt von dem optischen Frequenzspektrum ab, in welchem die Bildaufnahmeeinrichtung arbeitet. So ist beispielsweise Glas transparent für nahes infrarotes Licht, jedoch nicht transparent für fernes infrarotes Licht.

Die Vorrichtung kann eine Beleuchtungseinrichtung aufweisen. Diese kann ausgebildet sein, um die Verpackung und/oder die Siegelnaht auszuleuchten. Die Beleuchtungseinrichtung kann (ebenso wie die Bildaufnahmeeinrichtung) innerhalb oder außerhalb der Unterdruckkammer angeordnet sein. Durch das Ausleuchten der Verpackung und/oder die Siegelnaht kann die Erfassung der optischen Daten der Verpackung und/oder der Siegelnaht mittels der Bildaufnahmeeinrichtung optimiert werden.

Insbesondere kann die Beleuchtungseinrichtung und die Bildaufnahmeeinrichtung in einem gemeinsamen Gehäuse angeordnet sein.

Die Vorrichtung kann mindestens eine Transporteinrichtung aufweisen. Diese kann ausgebildet sein, um die Verpackung zu der Unterdruckkammer hin, durch die Unterdruckkammer hindurch und/oder von der Unterdruckkammer weg, zu transportieren. Somit können die Verpackungen automatisiert der Unterdruckkammer zugeführt, durch die Unterdruckkammer geführt, und/oder von der Unterdruckkammer abgeführt werden. Insbesondere kann die Transporteinrichtung als Förderband ausgeführt sein oder mindestens ein Förderband umfassen.

Insbesondere kann die Transporteinrichtung ein erstes Förderband umfassen, welches die Verpackungen der Unterdruckkammer zuführt. Insbesondere kann die Transporteinrichtung ein zweites Förderband umfassen welches, die Verpackungen durch die Unterdruckkammer hindurchführt, umfassen. Insbesondere kann die Transporteinrichtung ein drittes Förderband umfassen, welches die Verpackungen von der Unterdruckkammer abführt, umfassen.

Die Unterdruckkammer kann mindestens eine Schleuse aufweisen. Diese kann ausgebildet sein, um die Verpackung in die Unterdruckkammer und/oder aus der Unterdruckkammer bewegen zu können. Insbesondere kann die Unterdruckkammer zwei Schleusen aufweisen, die ausgebildet sind, um die Verpackung in die Unterdruckkammer und/oder aus der Unterdruckkammer bewegen zu können.

Die Vorrichtung weist mindestens eine Fixiereinrichtung auf. Die Fixiereinrichtung ist ausgebildet, um die ausgerichtete Verpackung in dem ausgerichteten Zustand zu fixieren.

Wird der Unterdruck aus der Unterdruckkammer entlassen, bzw. wird der Unterdruck innerhalb der Unterdruckkammer an den (normalen) außerhalb der Unterdruckkammer herrschenden Druck angepasst, so kann aufgrund von dieser Druckänderung die ausgerichtete Verpackung wieder in einen gefalteten Zustand übergehen. Mit anderen Worten, aufgrund von Druckschwankungen und/oder Druckunterschieden in der Unterdruckkammer kann die Verpackung wieder Falten bilden. Die Fixiereinrichtung kann als mindestens ein Klemmblech, insbesondere als zwei Klemmbleche, die insbesondere relativ zueinander bewegbar sind, ausgebildet sein. Damit kann ein Zurückweichen der in der Regel rechteckförmigen Verpackung auf der (später aufzuschneidenden) Seite über die ganze Länge hinweg vermieden werden.

Mit anderen Worten, durch das Fixieren der Verpackung in dem ausgerichteten Zustand mittels der Fixiereinrichtung wird insbesondere ein Wiedereinklappen der ausgerichteten Verpackung, insbesondere einer Seite der Verpackung, nach Änderung der Druckverhältnisse unterbunden und ein optionales, anschließendes sicheres Öffnen der Verpackung ermöglicht.

So kann ein optionales nach dem Ausrichten folgendes Öffnen der Verpackung optimiert werden. Die Verpackung kann beispielsweise so entlang einer entfalteten Siegelnaht oder parallel dazu geöffnet werden. Damit kann vermieden werden, dass die vorsterilisierten Artikel innerhalb der Verpackung beim Öffnen beschädigt werden.

Die Vorrichtung kann eine Ausschusseinrichtung aufweisen. Diese kann ausgebildet sein, um eine Verpackung, bei der ein Aufbrechen der Versiegelung und/oder der Siegelnaht mittels der Auswerteeinrichtung festgestellt wurde, auszusortieren. Die Ausschusseinrichtung kann beispielsweise ein Element umfassen, welches die auszusortierende Verpackung von einem Transportband befördert.

Es ist ebenso denkbar, dass eine Alarmeinrichtung vorgesehen ist, die Alarm schlägt, z. B. in Form eines akustischen und/oder optischen Signals, sobald ein Aufbrechen der Versiegelung und/oder der Siegelnaht mittels der Auswerteeinrichtung festgestellt wurde.

Weiter wird die zu lösende Aufgabe durch ein Verfahren zum Überprüfen einer Versiegelung, insbesondere mindestens einer Siegelnaht, einer Verpackung, mit den Merkmalen des nebengeordneten Anspruchs gelöst, wobei das Verfahren die Schritte umfasst:

Platzieren der Verpackung in einer Unterdruckkammer. Dies kann manuell durch eine Bedienperson oder automatisiert, beispielsweise mittels einer Transporteinrichtung realisiert werden. Die Verpackung liegt beim Platzieren in der Unterdruckkammer aufgrund des Transports (gestapelt in Kisten) in einem gefalteten Zustand vor.

Erzeugen eines Unterdrucks innerhalb der Unterdruckkammer, wobei sich die in der Unterdruckkammer befindliche Verpackung aufgrund von in der Verpackung befindlichem und infolge des in der Unterdruckkammer erzeugten Unterdrucks expandierendem Gas ausrichtet. Mit anderen Worten, das Gas (insbesondere Luft oder Schutzgas) innerhalb der Verpackung dehnt sich aufgrund des Unterdrucks in der Unterdruckkammer aus. Dabei drückt das sich ausdehnende Gas von innen gegen die gefaltete Verpackung und richtet diese somit auf bzw. entfaltet diese.

Erfassen der ausgerichteten Verpackung und/oder der Siegelnaht der ausgerichteten Verpackung in Form von optischen, insbesondere digitalen, Daten. Dies kann mittels einer Bildaufnahmeeinrichtung, wie beispielsweise einer (digital-) Kamera, realisiert werden. Dabei können die optischen Daten in Form mindestens eines (digitalen) Bildes/Fotos und/oder mindestens eines Videos erfasst werden.

Weiterhin verwendet das Verfahren eine der vorher beschriebenen Vorrichtungen.

Auswerten der erfassten optischen Daten, insbesondere durch Vergleichen mit vorbestimmten Werten, um festzustellen, ob die Versiegelung und/oder die Siegelnaht der Verpackung aufgebrochen wurden. Das Vergleichen der erfassten optischen Daten kann manuell, beispielsweise durch das Betrachten eines (digital-) Bildes bzw. Fotos durch eine Bedienperson, erfolgen. Es ist ebenso denkbar, dass das Auswerten automatisiert, beispielsweise mittels einer Auswerteeinrichtung (z. B. einem Computer) realisiert wird.

### Während des Schritts:

Erfassen der ausgerichteten Verpackung und/oder der Siegelnaht der ausgerichteten Verpackung in Form von optischen, insbesondere digitalen, Daten, kann die ausgerichtete Verpackung und/oder die Siegelnaht der ausgerichteten Verpackung, insbesondere mittels einer Beleuchtungseinrichtung, ausgeleuchtet werden.

Das Verfahren kann weiter den Schritt umfassen:
Fixieren der ausgerichteten Verpackung, so dass die ausgerichtete Verpackung im ausgerichteten Zustand verbleibt.

In diesem ausgerichteten (entfalteten) und fixierten Zustand ist die Verpackung einfacher zu öffnen, da die Falten der Verpackung im gefalteten Zustand ein sicheres Öffnen der Verpackung behindern können. So kann beispielsweise gewährleistet werden, dass die vorsterilisierten Artikel innerhalb der Verpackung durch das Öffnen, beispielsweise mittels eines Schneidwerkzeugs, nicht beschädigt werden. Die Verpackung kann manuell, beispielsweise durch eine Bedienperson, geöffnet werden. Es kann aber auch beispielsweise ein automatisiertes Öffnen der Verpackung vorgesehen sein.

Das Verfahren kann weiter den Schritt umfassen: Aussortieren der Verpackung, bei der ein Aufbrechen der Versiegelung und/oder der Siegelnaht festgestellt wurde.

Das Aussortieren kann beispielsweise manuell durch eine Bedienperson realisiert werden. Ebenso denkbar ist, dass das Aussortieren automatisiert, beispielsweise mittels einer Ausschusseinrichtung, realisiert wird.

Das Verfahren kann mit einer Vorrichtung mit obigen Merkmalen durchgeführt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht auf eine Vorrichtung zum Überprüfen einer Versiegelung einer Verpackung;
- Fig. 2: eine Draufsicht auf die Vorrichtung gem. Fig. 1;
- Fig. 3: eine Draufsicht auf eine schematische Darstellung einer Verpackung im ausgerichteten Zustand und
- Fig. 4: eine perspektivische Darstellung einer weiteren Ausführungsform einer Verpackung mit darin verpackten vorsterilisierten Artikeln.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

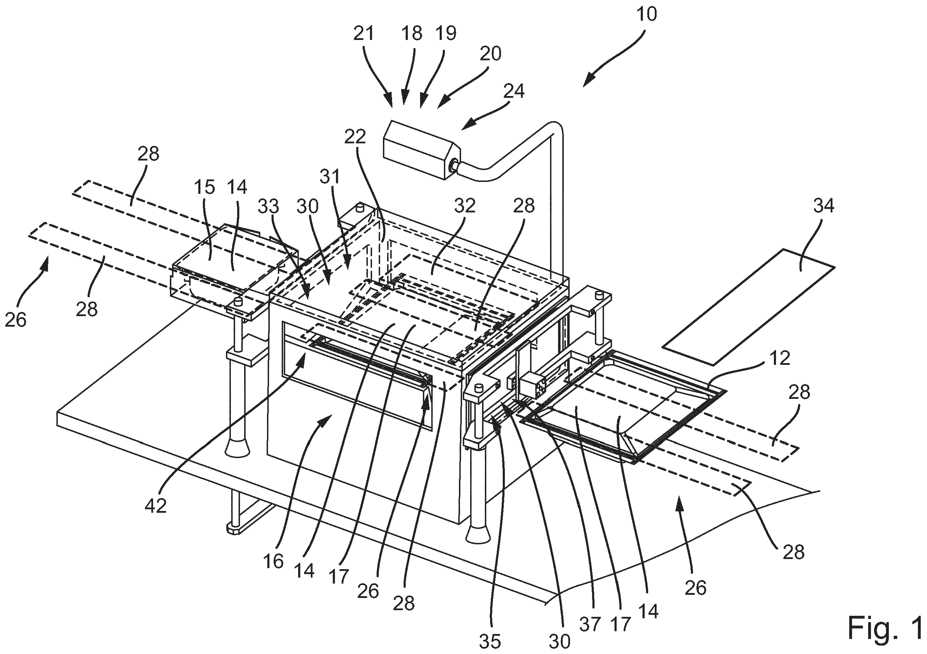

Figur 1 zeigt eine perspektivische Ansicht auf eine Vorrichtung 10 zum Überprüfen einer Versiegelung, insbesondere einer Siegelnaht 12 einer Verpackung 14.

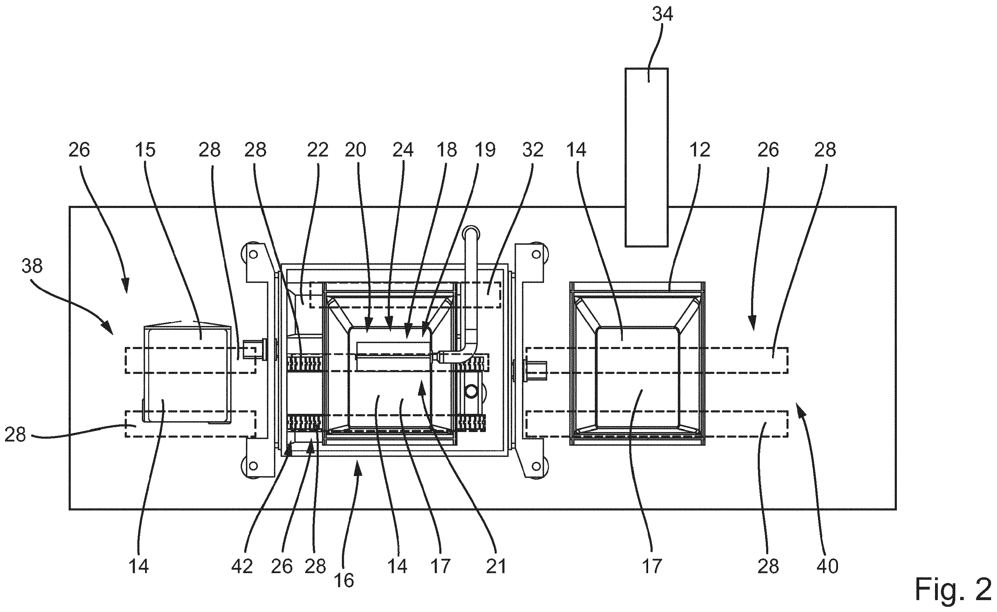

Die Vorrichtung 10 weist eine Unterdruckkammer 16 auf. Diese ist ausgebildet um Unterdruck zu erzeugen und mindestens eine Verpackung 14 aufzunehmen. Die Verpackung 14 wird im gefalteten Zustand 15 der Unterdruckkammer 16 zugeführt. Mit anderen Worten, die Verpackung 14 wird im gefalteten Zustand 15 in der Unterdruckkammer 16 platziert. Die in den Figuren 1 und 2 dargestellte Verpackung 14 innerhalb der Unterdruckkammer 16 befindet sich bereits in einem entfalteten Zustand 17.

Durch das Erzeugen des Unterdrucks in der Unterdruckkammer dehnt sich das in der Verpackung 14 befindliche Gas aus. Dabei drückt das sich ausdehnende (expandierende) Gas von innen gegen die Verpackung 14. Die Verpackung 14 entfaltet sich dadurch. Mit anderen Worten, die Verpackung 14 wird dadurch ausgerichtet.

Die Versiegelung und/oder die Siegelnaht 12 der nun im ausgerichteten Zustand 17 vorliegenden Verpackung 14 kann überprüft werden. Hierzu werden mittels einer Bildaufnahmeeinrichtung 18 optische, insbesondere digitale, Daten der Verpackung 14 im ausgerichteten Zustand 17 erfasst.

Vorliegend ist die Bildaufnahmeeinrichtung 18 in Form einer Digitalkamera 19 ausgebildet. Die optischen Daten werden in Form eines (digitalen) Bildes/Fotos erfasst.

Vorliegend ist die Digitalkamera 19 außerhalb und oberhalb der Unterdruckkammer 16 angeordnet. Die Digitalkamera 19 ist derart ausgerichtet, dass sie ein digitales Bild (Foto) von oben von der Verpackung 14 im ausgerichteten Zustand 17 aufnehmen kann.

In dem dargestellten Ausführungsbeispiel wird das von der Digitalkamera 19 aufgenommene digitale Bild an eine Auswerteeinrichtung 20 übermittelt. Die Auswerteeinrichtung 20 ist ausgebildet, um die von der Digitalkamera 19 erfassten Daten auszuwerten. Dies kann beispielsweise durch einen Abgleich mit vorbestimmten Werten realisiert werden.

So kann die Form der Verpackung 14 im entfalteten Zustand 17 einen solchen Wert darstellen. Ist eine Verpackung 14 beschädigt worden, so würde das in der Verpackung 14 befindliche Gas beim Erzeugen des Unterdrucks in der Unterdruckkammer 16 durch die beschädigte Stelle aus der Verpackung 14 entweichen. Als Folge würde die Verpackung 14 nicht oder zumindest nicht ausreichend entfaltet werden. Es ist daher denkbar, dass die Auswerteeinrichtung 20 überprüft, ob die erfasste Form der Verpackung 14 im entfalteten Zustand 17 der vorgegebenen Form der Verpackung 14 im entfalteten Zustand 17 entspricht. Bei einer entsprechend großen Abweichung kann auf eine Beschädigung der Verpackung 14 geschlossen werden.

Ein weiterer derartiger Wert kann beispielsweise ein Farb- und/oder Kontrastwert sein. Die Siegelnaht 12 kann sich von der restlichen Verpackung 14 farblich und insbesondere durch einen Kontrast gegenüber der Verpackung 14 abheben. Um diesen Effekt zu verstärken kann die Verpackung 14 eine einheitliche, insbesondere silberne, Außenfärbung aufweisen. Die Siegelnaht 12, die meist eine Vertiefung oder Erhebung gegenüber der Oberfläche der Verpackung 14 darstellt, hebt sich gegenüber der (z. B. silbernen) Außenfärbung der Verpackung 14 durch eine dunkle/dunklere Färbung bzw. einen hohen/höheren Kontrastwert ab. So kann die Form der Siegelnaht 12 genau erfasst werden und mit einer vorgegebenen Form abgeglichen werden.

Entspricht beispielsweise die erfasste Form der Siegelnaht 12 einer Linie, insbesondere mit einer entlang der Linie gleichbleibenden Dicke, so kann auf eine unbeschädigte Siegelnaht 12 geschlossen werden. Weicht die erfasste Form der Siegelnaht 12 (wesentlich) von der vorgegebenen Form ab, so kann auf eine Beschädigung der Siegelnaht 12 geschlossen werden.

Entspricht beispielsweise die erfasste Form der Siegelnaht 12 nicht einer Linie, einem bestimmten Verlauf einer Linie und/oder weist die Linienform der Siegelnaht 12 ungleiche Dicken auf, so kann auf eine Beschädigung der Siegelnaht 12 geschlossen werden.

Ebenso kann auch eine Beschädigung an der Verpackung einen solchen Farb- und/oder Kontrastwert darstellen.

Dieser Effekt kann weiter durch eine entsprechende Ausleuchtung der Siegelnaht 12 bzw. der Verpackung 14 verstärkt werden. Hierzu ist an der Vorrichtung 10 eine Beleuchtungseinrichtung 24 vorgesehen.

Vorliegend ist die Beleuchtungseinrichtung 24 in unmittelbarer Nähe zur Digitalkamera 19 angeordnet. So kann die Beleuchtungseinrichtung 24 optimal den Erfassungsbereich der Digitalkamera 19 ausleuchten.

Vorliegend ist die Digitalkamera 19, die Auswerteeinrichtung 20 und die Beleuchtungseinrichtung 24 in einem Gehäuse 21 angeordnet. Dadurch ergibt sich eine kompakte Bauweise.

Zudem ergibt sich der Vorteil, dass die einzelnen Komponenten, insbesondere die Digitalkamera 19 und die Beleuchtungseinrichtung 24, nur einmalig aufeinander eingestellt werden müssen. Wird beispielsweise der Erfassungsbereich der Digitalkamera 19 durch ein Umpositionieren, Drehen und/oder Kippen der Digitalkamera 19 verändert, so ist eine Ausrichtung/Anpassung der Beleuchtungseinrichtung 24 unnötig. Da diese im gleichen Gehäuse 21 angeordnet ist, wird die Beleuchtungseinrichtung 24 zusammen mit der Digitalkamera 19 umpositioniert, gedreht und/oder gekippt wird, so dass die optimal eingestellte Ausleuchtung des Erfassungsbereiches der Digitalkamera 19 optimal ausgeleuchtet bleibt.

Die Unterdruckkammer 16 ist vorliegend in Form eines Quaders ausgebildet. Die Unterdruckkammer 16 weist eine Wand 22 auf, die gegenüber der Bildaufnahmeeinrichtung 18 transparent ausgebildet ist. Mit anderen Worten, die Wand 22 es aus einem Bildaufnahmeeinrichtung 18 transparentem Material (z. B. Glas) ausgebildet. Die Wand 22 ist zwischen der in der Unterdruckkammer 16 platzierten Verpackung 14 und der Digitalkamera 19 (bzw. Beleuchtungseinrichtung 24 und Auswerteeinrichtung 20) angeordnet. Mit anderen Worten, die Wand 22 bildet die Oberseite der als Quader ausgebildeten Unterdruckkammer 16.

Die Unterdruckkammer 16 weist zwei Schleusen 30 auf. Eine erste Schleuse 31 ist an einer ersten Seitenwand 33 der Unterdruckkammer 16 angeordnet. Die erste Seitenwand 33 bildet vorliegend eine erste Seite des als Quader ausgebildeten Unterdruckkammer 16.

Die erste Schleuse 31 ist ausgebildet, um die Verpackung 14 in die Unterdruckkammer 16 bewegen bzw. transportieren zu können.

Die Unterdruckkammer 16 weist eine zweite Schleuse 35 auf. Diese ist an einer zweiten Seitenwand 37 angeordnet. Die zweite Seitenwand 37 ist der ersten Seitenwand 33 gegenüberliegend angeordnet. Die zweite Schleuse 35 ist ausgebildet, um die Verpackung 14 aus der Unterdruckkammer 16 bewegen bzw. transportieren zu können.

Figur 2 zeigt Draufsicht auf die Vorrichtung 10 gemäß Figur 1.

Die Vorrichtung 10 weist weiter eine Transporteinrichtung 26 auf. Die Transporteinrichtung 26 umfasst vorliegend mehrere Förderbänder 28. Diese sind in den Figuren 1 und 2 lediglich gestrichelt angedeutet.

Zwei Förderbänder 28 sind außerhalb der Unterdruckkammer 16 angeordnet (in Figur 2 links) und bilden die Zuführung 38 zur Unterdruckkammer 16. Die Verpackung 14 im gefalteten Zustand 15 wird mittels der Zuführung 38 der Unterdruckkammer 16 durch die erste Schleuse 31 (in Figur 1 dargestellt) zugeführt.

Auf der gegenüberliegenden Seite der Unterdruckkammer 16 (in Figur 2 rechts) sind zwei weitere Förderbänder 28 außerhalb der Unterdruckkammer 16 angeordnet. Diese bilden die Abführung 40 von der Unterdruckkammer 16. Vorliegend wird die Verpackung 14 im entfalteten Zustand 17 mittels der Abführung 40 von der Unterdruckkammer 16 abtransportiert. Zum Abtransport der Verpackung 14 mittels der Abführung 40 wird diese durch die zweite Schleuse 35 (in Figur 1 dargestellt) aus der Unterdruckkammer 16 ausgeschleust.

Innerhalb der Unterdruckkammer 16 sind zwei weitere Förderbänder 28 angeordnet. Diese bilden die Transfereinrichtung 42. Die Transfereinrichtung 42 ist ausgebildet, um die Verpackung 14 von der ersten Schleuse 31 durch die Unterdruckkammer 16 zur zweiten Schleuse 35 zu transportieren.

Die Vorrichtung 10 weist weiter eine Ausschusseinrichtung 34 auf. Diese ist in Figur 1 und 2 lediglich schematisch angedeutet.

Die Ausschusseinrichtung 34 ist ausgebildet, um eine als beschädigt identifizierte Verpackung 14 von den Förderbändern 28 der Abführung 40 zu befördern (beispielsweise in einen nicht dargestellten Ausschussbehälter).

Dies kann im einfachsten Fall mechanisch durch eine Krafteinwirkung auf die Verpackung 14 quer zur Transportrichtung der Förderbänder 28 der Abführung 40 realisiert werden. Mit anderen Worten, die als beschädigt identifizierte Verpackung 14 kann von den Förderbändern 28 der Abführung 40 mittels der Ausschusseinrichtung 34 gestoßen werden.

Die Verpackung 15, bei der keine Beschädigung ermittelt werden konnte, wird hingegen an der Ausschusseinrichtung 34 vorbei mittels der Förderbändert 28 der Abführung 40 weitertransportiert.

Die Vorrichtung 10 weist weiter eine Fixiereinrichtung 32 auf. Die Fixiereinrichtung 32 ist ausgebildet, um die ausgerichtete Verpackung 14 in dem ausgerichteten Zustand 17 zu fixieren.

Die Fixiereinrichtung 32 ist in den Figuren 1 und 2 lediglich gestrichelt angedeutet. Die Fixiereinrichtung 32 ist innerhalb der Unterdruckkammer 16 angeordnet und kann beispielsweise als ein Klemmblech ausgebildet sein. Die Fixiereinrichtung 32 fixiert, beispielsweise durch Klemmen, die Verpackung 14 in dem ausgerichteten Zustand 17 in der Unterdruckkammer 16.

Dadurch kann gewährleistet werden, dass die ausgerichtete Verpackung 14 (beispielsweise durch Druckschwankungen und/oder Druckunterschiede in der Unterdruckkammer 16) nicht wieder Falten bildet bzw. nicht wieder in den gefalteten Zustand 15 zurückkehrt.

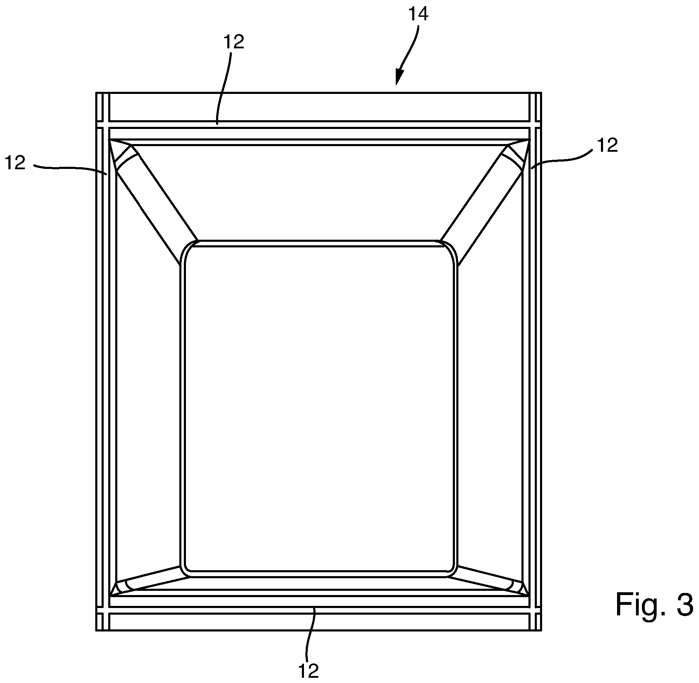

Figur 3 zeigt eine Draufsicht auf eine schematische Darstellung einer Verpackung 14 im entfalteten Zustand 17. Die dargestellte Verpackung 14 soll schematisch den ausgerichteten Zustand 17 veranschaulichen. Die dargestellte Verpackung 14 weist im entfalteten Zustand 17 eine rechteckige Form auf und vier jeweils entlang einer Seite der Verpackung 14 verlaufenden Siegelnähte 12. Die Siegelnähte 12 weisen im Wesentlichen die Form von gerade verlaufenden Linien auf.

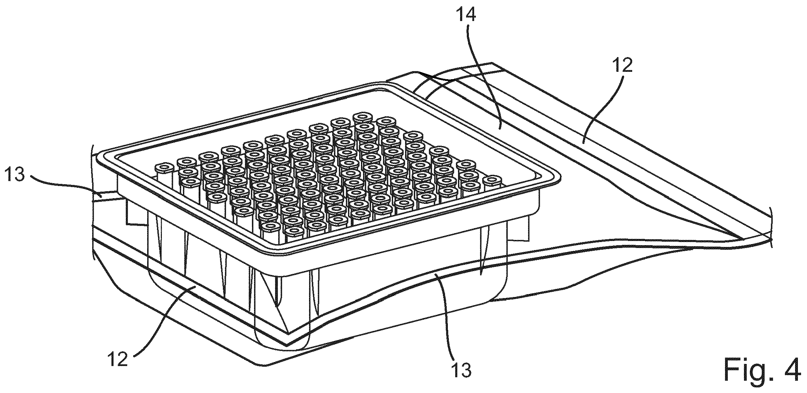

Figur 4 zeigt eine perspektivische Darstellung einer Verpackung 14 mit darin verpackten vorsterilisierten Artikeln. Dargestellt ist der ausgerichtete Zustand 17 der Verpackung 14. Die dargestellte Verpackung 14 weist eine rechteckige Grundform auf. Durch die sich in der Verpackung 14 befindenden vorsterilisierten Artikel, die die Verpackung 14 nach außen hin wölben, weisen die Seitensiegelnähte 13 eine entsprechende Krümmung zur Mitte der Verpackung 14 hin auf.

Mit anderen Worten die dargestellte Verpackung 14 weist im ausgerichteten Zustand 17 (dargestellt) zwei Siegelnähte 12 auf, die im Wesentlichen die Form einer gerade verlaufenden Linie aufweisen und zwei Seitensiegelnähte 13, die im Wesentlichen die Form einer gekrümmt verlaufenden Linie aufweisen. Die Siegelnähte 13 können aber auch die Form einer im Wesentlichen gerade verlaufenden Linie aufweisen.

## Patentansprüche

1. Vorrichtung (10) zum Überprüfen einer Versiegelung, insbesondere mindestens einer Siegelnaht (12), einer gefalteten Verpackung (14), wobei die Vorrichtung (10) umfasst:
- eine Unterdruckkammer (16), die ausgebildet ist, um mindestens eine Verpackung (14) aufzunehmen und einen Unterdruck in der Unterdruckkammer (16) zu erzeugen, so dass sich eine in der Unterdruckkammer (16) befindliche Verpackung (14) aufgrund von in der Verpackung (14) befindlichem und infolge des in der Unterdruckkammer (16) erzeugten Unterdrucks expandierendem Gas ausrichtet,
wobei die Vorrichtung (10) eine Bildaufnahmeeinrichtung (18) umfasst, die ausgebildet ist, um die ausgerichtete Verpackung (10) und/oder die Siegelnaht (12) der ausgerichteten Verpackung (10) in Form von optischen, insbesondere digitalen, Daten zu erfassen, wobei die erfassten Daten in Form eines Bildes oder eines Videos von der gesamten Verpackung, Teilen der Verpackung, der Siegelnaht, mehreren Siegelnähten oder einzelnen Bereichen der einzelnen Siegelnähte, erfasst werden, die es erlauben festzustellen, ob die Versiegelung noch intakt ist, **dadurch gekennzeichnet,**
**dass** die Vorrichtung (10) mindestens eine Fixiereinrichtung (32) aufweist, wobei die Fixiereinrichtung (32) ausgebildet ist, um die ausgerichtete Verpackung (14) in dem ausgerichteten Zustand (17) zu fixieren.

2. Vorrichtung (10) nach Anspruch 1, **dadurch gekennzeichnet, dass** die Vorrichtung (10) eine Auswerteeinrichtung (20) aufweist, die ausgebildet ist, um die mittels der Bildaufnahmeeinrichtung (18) erfassten optischen Daten auszuwerten, insbesondere durch Vergleichen mit vorbestimmten Werten, um aufgrund der ausgewerteten Daten feststellen zu können, ob die Versiegelung und/oder die Siegelnaht (12) der Verpackung (14) aufgebrochen wurden.

3. Vorrichtung (10) nach Anspruch 1 oder Anspruch 2, **dadurch gekennzeichnet, dass** die Bildaufnahmeeinrichtung (18) innerhalb der Unterdruckkammer (16) angeordnet ist.

4. Vorrichtung (10) nach Anspruch 1 oder Anspruch 2, **dadurch gekennzeichnet, dass** die Bildaufnahmeeinrichtung (18) außerhalb der Unterdruckkammer (16) angeordnet ist.

5. Vorrichtung (10) nach einem der voranstehenden Ansprüche, **dadurch gekennzeichnet, dass** mindestens eine Wand (22) der Unterdruckkammer (16) zumindest teilweise aus einem für die Bildaufnahmeeinrichtung (18) transparentem Material, insbesondere Glas, ausgebildet ist.

6. Vorrichtung (10) nach einem der voranstehenden Ansprüche, **dadurch gekennzeichnet, dass** die Vorrichtung (10) eine Beleuchtungseinrichtung (24) aufweist, die ausgebildet ist, um die Verpackung (14) und/oder die Siegelnaht (12) auszuleuchten.

7. Vorrichtung (10) nach einem der voranstehenden Ansprüche, **dadurch gekennzeichnet, dass** die Vorrichtung (10) mindestens eine Transporteinrichtung (26), insbesondere mindestens ein Förderband (28), aufweist, wobei die Transporteinrichtung (26) ausgebildet ist, um die Verpackung (14) zu der Unterdruckkammer (16) hin, durch die Unterdruckkammer (16) hindurch und/oder von der Unterdruckkammer (16) weg, zu transportieren.

8. Vorrichtung (10) nach einem der voranstehenden Ansprüche, **dadurch gekennzeichnet, dass** die Unterdruckkammer (16) mindestens eine Schleuse (30, 31, 35), insbesondere zwei Schleusen (30, 31, 35), aufweist, die ausgebildet ist, um die Verpackung (14) in die Unterdruckkammer (16) und/oder aus der Unterdruckkammer (16) bewegen zu können.

9. Vorrichtung (10) nach einem der voranstehenden Ansprüche, **dadurch gekennzeichnet, dass** die Vorrichtung (10) eine Ausschusseinrichtung (34) aufweist, die ausgebildet ist, um eine Verpackung (14), bei der ein Aufbrechen der Versiegelung und/oder der Siegelnaht (12) mittels der Auswerteeinrichtung (20) festgestellt wurde, auszusortieren.

10. Verfahren zum Überprüfen einer Versiegelung, insbesondere mindestens einer Siegelnaht (12), einer gefalteten Verpackung (14), umfassend die Schritte:
- Platzieren der gefalteten Verpackung (14) in eine Unterdruckkammer (16),
- Erzeugen eines Unterdrucks innerhalb der Unterdruckkammer (16), wobei sich die in der Unterdruckkammer (16) befindliche Verpackung (14) aufgrund von in der Verpackung (14) befindlichem und infolge des in der Unterdruckkammer (16) erzeugten Unterdrucks expandierendem Gas ausrichtet,
- Erfassen der ausgerichteten Verpackung (10) und/oder der Siegelnaht (12) der ausgerichteten Verpackung (10) in Form von optischen, insbesondere digitalen, Daten,
- Auswerten der erfassten optischen Daten, insbesondere durch Vergleichen mit vorbestimmten Werten, um festzustellen, ob die Versiegelung und/oder die Siegelnaht (12) der Verpackung (14) aufgebrochen wurden,
wobei die erfassten Daten in Form eines Bildes oder eines Videos von der gesamten Verpackung, Teilen der Verpackung, der Siegelnaht, mehreren Siegelnähten oder einzelnen Bereichen der einzelnen Siegelnähte, erfasst werden, die es erlauben festzustellen, ob die Versiegelung noch intakt ist, **dadurch gekennzeichnet, dass** zum Durchführen des Verfahrens eine Vorrichtung (10) nach einem der Ansprüche 1 bis 9 verwendet wird.

11. Verfahren nach Anspruch 10, **dadurch gekennzeichnet, dass** während des Schritts:
- Erfassen der ausgerichteten Verpackung (10) und/oder der Siegelnaht (12) der ausgerichteten Verpackung (10) in Form von optischen, insbesondere digitalen, Daten,
die ausgerichtete Verpackung (10) und/oder die Siegelnaht (12) der ausgerichteten Verpackung (10), insbesondere mittels einer Beleuchtungseinrichtung (24), ausgeleuchtet wird.

12. Verfahren nach Anspruch 10 oder Anspruch 11, **dadurch gekennzeichnet, dass** das Verfahren den Schritt umfasst:
- Fixieren der ausgerichteten Verpackung (14), so dass die ausgerichtete Verpackung (14) im ausgerichteten Zustand verbleibt.

13. Verfahren nach einem der Ansprüche 10 bis 12, **dadurch gekennzeichnet, dass** das Verfahren den Schritt umfasst:
- Aussortieren der Verpackung (14), bei der ein Aufbrechen der Versiegelung und/oder der Siegelnaht (12) festgestellt wurde.

## Claims

1. Device (10) for checking a seal, in particular at least one sealing seam (12), of a folded packaging (14), the device (10) comprising:
- a negative pressure chamber (16) which is designed to receive at least one packaging (14) and to generate a negative pressure in the negative pressure chamber (16), so that a packaging (14) located in the negative pressure chamber (16) is aligned due to gas located in the packaging (14) and expanding as a result of the negative pressure generated in the negative pressure chamber (16),
the device (10) comprising an
image capture apparatus (18) which is designed to capture the aligned packaging (10) and/or the sealing seam (12) of the aligned packaging (10) in the form of optical, in particular digital, data, the captured data being captured in the form of an image or a video of the entire packaging, parts of the packaging, the sealing seam, a plurality of sealing seams or individual regions of the individual sealing seams, which make it possible to determine whether the seal is still intact, **characterized in that** the device (10) has at least one fixing apparatus (32), the fixing apparatus (32) being designed to fix the aligned packaging (14) in the aligned state (17).

2. Device (10) according to claim 1, **characterized in that** the device (10) has an evaluation apparatus (20) which is designed to evaluate the optical data captured by means of the image capture apparatus (18), in particular by comparing them with predetermined values, in order to be able to determine, on the basis of the evaluated data, whether the seal and/or the sealing seam (12) of the packaging (14) have been broken.

3. Device (10) according to claim 1 or claim 2, **characterized in that** the image capture apparatus (18) is arranged inside the negative pressure chamber (16).

4. Device (10) according to claim 1 or claim 2, **characterized in that** the image capture apparatus (18) is arranged outside the negative pressure chamber (16).

5. Device (10) according to any one of the preceding claims,
**characterized in that** at least one wall (22) of the negative pressure chamber (16) is formed at least partially from a material, in particular glass, which is transparent for the image capture apparatus (18).

6. Device (10) according to any one of the preceding claims,
**characterized in that** the device (10) comprises an illumination apparatus (24) which is designed to illuminate the packaging (14) and/or the sealing seam (12).

7. Device (10) according to any one of the preceding claims,
**characterized in that** the device (10) has at least one transport apparatus (26), in particular at least one conveyor belt (28), the transport apparatus (26) being designed to transport the packaging (14) towards the negative pressure chamber (16), through the negative pressure chamber (16) and/or away from the negative pressure chamber (16).

8. Device (10) according to any one of the preceding claims,
**characterized in that** the negative pressure chamber (16) has at least one airlock (30, 31, 35), in particular two airlocks (30, 31, 35), designed to be able to move the packaging (14) into the negative pressure chamber (16) and/or out of the negative pressure chamber (16).

9. Device (10) according to any one of the preceding claims,
**characterized in that** the device (10) has a rejection apparatus (34) which is designed to sort out a packaging (14) in which a breaking of the seal and/or the sealing seam (12) has been detected by means of the evaluation apparatus (20).

10. Method for checking a seal, in particular at least one sealing seam (12), of a folded packaging (14), comprising the steps of:
- placing the folded packaging (14) in a negative pressure chamber (16),
- generating a negative pressure inside the negative pressure chamber (16), the packaging (14) located in the negative pressure chamber (16) being aligned due to gas located in the packaging (14) and expanding as a result of the negative pressure generated in the negative pressure chamber (16),
- capturing the aligned packaging (10) and/or the sealing seam (12) of the aligned packaging (10) in the form of optical, in particular digital, data,
- evaluating the captured optical data, in particular by comparing them with predetermined values, in order to determine whether the seal and/or the sealing seam (12) of the packaging (14) have been broken,
the captured data being captured in the form of an image or a video of the entire packaging, parts of the packaging, the sealing seam, a plurality of sealing seams or individual regions of the individual sealing seams, which make it possible to determine whether the seal is still intact, **characterized in that** a device (10) according to any one of claims 1 to 9 is used to carry out the method.

11. Method according to claim 10, **characterized in that** during the step of:
- capturing the aligned packaging (10) and/or the sealing seam (12) of the aligned packaging (10) in the form of optical, in particular digital, data,
the aligned packaging (10) and/or the sealing seam (12) of the aligned packaging (10) is illuminated, in particular by means of an illumination apparatus (24).

12. Method according to claim 10 or claim 11, **characterized in that** the method comprises the step of:
- fixing the aligned packaging (14) so that the aligned packaging (14) remains in the aligned state.

13. Method according to any one of claims 10 to 12, **characterized in that** the method comprises the step of:
- sorting out the packaging (14) in which a breaking of the seal and/or the sealing seam (12) has been detected.

## Revendications

1. Dispositif (10) permettant de contrôler un scellement, en particulier au moins un joint de scellement (12), d'un emballage (14) plié, dans lequel le dispositif (10) comprend :
- une chambre à dépression (16) qui est conçue pour recevoir au moins un emballage (14) et pour générer une dépression dans la chambre à dépression (16), de sorte qu'un emballage (14) situé dans la chambre à dépression (16) s'aligne en raison du gaz présent dans l'emballage (14) et se dilatant en raison de la dépression générée dans la chambre à dépression (16),
dans lequel le dispositif (10) comprend un
appareil de capture d'image (18) qui est conçu pour détecter l'emballage (10) aligné et/ou le joint de scellement (12) de l'emballage (10) aligné sous forme de données optiques, en particulier numériques, dans lequel les données détectées sont détectées sous la forme d'une image ou d'une vidéo de l'ensemble de l'emballage, de parties de l'emballage, du joint de scellement, de plusieurs joints de scellement ou de zones individuelles des joints de scellement individuels, qui permettent de constater si le scellement est encore intact, **caractérisé en ce que** le dispositif (10) présente au moins un appareil de fixation (32), dans lequel l'appareil de fixation (32) est conçu pour fixer l'emballage (14) aligné dans l'état aligné (17).

2. Dispositif (10) selon la revendication 1, **caractérisé en ce que** le dispositif (10) présente un appareil d'évaluation (20) qui est configuré pour évaluer les données optiques détectées au moyen de l'appareil de capture d'image (18), en particulier par comparaison avec des valeurs prédéterminées, afin de pouvoir déterminer, sur la base des données évaluées, si le scellement et/ou le joint de scellement (12) de l'emballage (14) ont été rompus.

3. Dispositif (10) selon la revendication 1 ou la revendication 2,
**caractérisé en ce que** l'appareil de capture d'image (18) est disposé à l'intérieur de la chambre à dépression (16).

4. Dispositif (10) selon la revendication 1 ou la revendication 2,
**caractérisé en ce que** l'appareil de capture d'image (18) est disposé à l'extérieur de la chambre à dépression (16).

5. Dispositif (10) selon l'une des revendications précédentes,
**caractérisé en ce qu'**au moins une paroi (22) de la chambre à dépression (16) est conçue au moins partiellement en un matériau transparent, en particulier en verre, pour l'appareil de capture d'image (18).

6. Dispositif (10) selon l'une des revendications précédentes,
**caractérisé en ce que** le dispositif (10) présente un appareil d'éclairage (24) qui est conçu pour éclairer l'emballage (14) et/ou le joint de scellement (12).

7. Dispositif (10) selon l'une des revendications précédentes,
**caractérisé en ce que** le dispositif (10) présente au moins un appareil de transport (26), en particulier au moins une bande transporteuse (28), dans lequel l'appareil de transport (26) est conçu pour transporter l'emballage (14) vers la chambre à dépression (16), à travers la chambre à dépression (16) et/ou à partir de la chambre à dépression (16).

8. Dispositif (10) selon l'une des revendications précédentes,
**caractérisé en ce que** la chambre à dépression (16) présente au moins un sas (30, 31, 35), en particulier deux sas (30, 31, 35), qui sont conçus pour pouvoir déplacer l'emballage (14) dans la chambre à dépression (16) et/ou hors de la chambre à dépression (16).

9. Dispositif (10) selon l'une des revendications précédentes,
**caractérisé en ce que** le dispositif (10) présente un appareil de rejet (34) qui est conçu pour rejeter un emballage (14) pour lequel une rupture du scellement et/ou du joint de scellement (12) a été constatée au moyen de l'appareil d'évaluation (20).

10. Procédé permettant de contrôler un scellement, en particulier au moins un joint de scellement (12), d'un emballage (14) plié, comprenant les étapes consistant à :
- placer l'emballage (14) plié dans une chambre à dépression (16),
- générer une dépression à l'intérieur de la chambre à dépression (16), dans lequel l'emballage (14) situé dans la chambre à dépression (16) s'aligne en raison du gaz présent dans l'emballage (14) et se dilatant en raison de la dépression générée dans la chambre à dépression (16),
- détecter l'emballage (10) aligné et/ou le joint de scellement (12) de l'emballage (10) aligné sous forme de données optiques, en particulier numériques,
- évaluer les données optiques détectées, en particulier par comparaison avec des valeurs prédéterminées, afin de constater si le scellement et/ou le joint de scellement (12) de l'emballage (14) ont été rompus,
dans lequel les données détectées sont détectées sous la forme d'une image ou d'une vidéo de l'ensemble de l'emballage, de parties de l'emballage, du joint de scellement, de plusieurs joints de scellement ou de zones individuelles des joints de scellement individuels, qui permettent de constater si le scellage est encore intact, **caractérisé en ce que,** pour la mise en œuvre du procédé, un dispositif (10) selon l'une des revendications 1 à 9 est utilisé.

11. Procédé selon la revendication 10, **caractérisé en ce que,** pendant l'étape consistant à :
- détecter l'emballage (10) aligné et/ou le joint de scellement (12) de l'emballage (10) aligné sous forme de données optiques, en particulier numériques,
l'emballage (10) aligné et/ou le joint de scellement (12) de l'emballage (10) aligné sont éclairés, en particulier au moyen d'un appareil d'éclairage (24).

12. Procédé selon la revendication 10 ou la revendication 11,
**caractérisé en ce que** le procédé comprend l'étape consistant à :
- fixer l'emballage (14) aligné, de sorte que l'emballage (14) aligné reste dans l'état aligné.

13. Procédé selon l'une des revendications 10 à 12, **caractérisé en ce que** le procédé comprend l'étape consistant à :
- trier et sortir l'emballage (14) pour lequel une rupture du scellement et/ou du joint de scellement (12) a été constatée.
